(19) Europäisches Patentamt / European Patent Office / Office européen des brevets

(11) **EP 4 421 947 B1**

(12) **EUROPEAN PATENT SPECIFICATION**

(45) Date of publication and mention of the grant of the patent:
**18.03.2026   Bulletin 2026/12**

(21) Application number: **22897257.6**

(22) Date of filing: **25.08.2022**

(51) International Patent Classification (IPC):
*H01M 10/54* (2006.01)        *H01M 4/131* (2010.01)
*C22B 1/00* (2006.01)         *C22B 3/04* (2006.01)
*C22B 3/06* (2006.01)         *C22B 3/26* (2006.01)
*C22B 7/00* (2006.01)         *C22B 3/00* (2006.01)
*C22B 26/12* (2006.01)        *C22B 47/00* (2006.01)

(52) Cooperative Patent Classification (CPC):
**H01M 10/54; C22B 1/005; C22B 3/04; C22B 3/06;
C22B 3/26; C22B 7/007; C22B 23/0415;
C22B 26/12; C22B 47/00; H01M 4/131;**
Y02E 60/10; Y02P 10/20; Y02W 30/84

(86) International application number:
**PCT/CN2022/114927**

(87) International publication number:
**WO 2023/093163 (01.06.2023 Gazette 2023/22)**

(54) **METHOD FOR RECOVERING LITHIUM BATTERY POSITIVE ELECTRODE PLATE**

VERFAHREN ZUR RÜCKGEWINNUNG EINER POSITIVEN ELEKTRODENPLATTE EINER LITHIUMBATTERIE

PROCÉDÉ DE RÉCUPÉRATION D'UNE PLAQUE D'ÉLECTRODE POSITIVE DE BATTERIE AU LITHIUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Validation States:
**MA**

(30) Priority: **23.11.2021   CN 202111391235**

(43) Date of publication of application:
**28.08.2024   Bulletin 2024/35**

(73) Proprietors:
• **Guangdong Brunp Recycling Technology Co., Ltd.**
  **Foshan, Guangdong 528137 (CN)**
• **Hunan Brunp Recycling Technology Co., Ltd.**
  **Changsha, Hunan 410600 (CN)**
• **Hunan Brunp EV Recycling Co., Ltd.**
  **Changsha, Hunan 410600 (CN)**

(72) Inventors:
• **OUYANG, Shibao**
  **Foshan, Guangdong 528137 (CN)**
• **LI, Changdong**
  **Foshan, Guangdong 528137 (CN)**
• **CHEN, Ruokui**
  **Foshan, Guangdong 528137 (CN)**
• **CAI, Qiudong**
  **Foshan, Guangdong 528137 (CN)**
• **RUAN, Dingshan**
  **Foshan, Guangdong 528137 (CN)**
• **CAI, Yong**
  **Foshan, Guangdong 528137 (CN)**

(74) Representative: **Torner, Juncosa I Associats, SL**
**C / Pau Claris, 108, 1r 1a**
**08009 Barcelona (ES)**

(56) References cited:
CN-A- 104 157 926        CN-A- 107 267 759
CN-A- 110 616 331        CN-A- 111 945 002
CN-A- 112 079 371        CN-A- 113 517 484

CN-A- 114 134 329    CN-A- 114 188 627
JP-A- 2015 137 393

- ZHANG YANG ET AL: "Comprehensive Recovery of Valuable Metals in Waste Lithium-Ion Batteries", CHINESE JOURNAL OF RARE METALS, vol. 33, no. 6, 31 December 2009 (2009-12-31), CN, pages 931 - 935, XP093068564, ISSN: 0258-7076, DOI: 10.3969/j.issn.0258-7076.2009.06.032
- BAE HYUNTAE ET AL: "Technologies of lithium recycling from waste lithium ion batteries: a review", vol. 2, no. 10, 28 April 2021 (2021-04-28), pages 3234 - 3250, XP093111365, ISSN: 2633-5409, Retrieved from the Internet <URL:https://pubs.rsc.org/en/content/articlepdf/2021/ma/d1ma00216c> DOI: 10.1039/D1MA00216C

- ZHANG YANG, MAN RUILIN, WANG HUI, LIANG YONGHUANG, YAN SHA: "Comprehensive Recovery of Valuable Metals in Waste Lithium-Ion Batteries", CHINESE JOURNAL OF RARE METALS, CN, vol. 33, no. 6, 31 December 2009 (2009-12-31), CN
, pages 931 - 935, XP093068564, ISSN: 0258-7076, DOI: 10.3969/j.issn.0258-7076.2009.06.032

# EP 4 421 947 B1

## Description

### TECHNICAL FIELD

The present disclosure relates to the technical field of secondary resource recovery, in particular to a method for recovering a positive electrode plate of a lithium battery.

### BACKGROUND ART

Lithium batteries (including lithium ion batteries and lithium metal batteries), as a kind of efficient energy storage batteries, have been widely applied in daily lives of citizens. In recent years, with the booming development of new energy industry, demand of the market on the lithium batteries is massively increased again. However, due to limitation from recovery and recycle technologies, after the lithium batteries reach the end of their service life, only a few of the lithium batteries can be used for echelon utilization, and most of them are scrapped. The scrapped lithium batteries contain a large amount of elements such as nickel, cobalt, manganese and lithium. After these elements are released into an environment, on one hand, serious environmental pollution can be caused, and on the other hand, significant resource waste can further be created. Therefore, development of technologies for recovering and utilizing waste lithium batteries is imperative.

At present, recovery methods for the waste lithium batteries mainly include a pyrometallurgical process and a hydrometallurgical process. Since the hydrometallurgical recovery process can allow recovery rate of valuable metals (transition metals and lithium) in the waste lithium batteries to reach 95% or more, the current main process for recovery of the waste lithium batteries is the hydrometallurgical process. In the traditional hydrometallurgical recovery process route, the waste lithium batteries are discharged, shredded, sorted and screened to obtain battery powder as well as copper and aluminum residues, a diaphragm or the like. Then, the valuable metals in the battery powder is leached by using a mixed system of an acid and a reducing agent, iron powder is added in an obtained leaching solution to remove copper, alkali is then added in a solution obtained after removal of the copper to adjust a pH value to remove iron and aluminum, sodium fluoride is added in a solution obtained after removal of iron and aluminum to remove calcium and magnesium, a solution after removal of calcium and magnesium is deeply extracted with a P204 extraction agent to remove copper and zinc impurities and the like, and an obtained raffinate is extracted with a P507 extraction agent to extract nickel, cobalt and manganese metals into an organic phase; and after reverse extraction with sulfuric acid, a nickel-cobalt-manganese sulfate solution is obtained for synthesis of a precursor material, soda is added in the raffinate to prepare lithium carbonate, and produced waste water is sent to a water treatment workshop to remove fluoride, oil, and COD, etc. When this process route is used to remove iron and aluminum, since pH value of the nickel-cobalt-manganese sulfate solution is adjusted to 4.0-6.0, a part of the nickel, cobalt and manganese metals are inevitably precipitated, and resulting iron and aluminum residues can also adsorb a part of the nickel, cobalt and manganese metals, thereby leading to loss of the nickel, cobalt and manganese metals; and the solution is also difficultly filtered when iron and aluminum are removed.

To sum, the existing method for recovering the positive electrode plate of the lithium battery has the problems of complicated steps, incomplete impurity removal and low valuable metal recovery rate.

### SUMMARY

The present disclosure aims to solve at least one of problems existing in the existing technology. In view of this, the present disclosure provides a method for recovering a positive electrode plate of a lithium battery. Through coordination between various steps and between used raw materials, aluminum impurity in powder of a positive electrode plate and fluorine impurity in a leaching solution can be thoroughly removed, and the loss rate of a valuable metal in the powder of the positive electrode plate is ensured to be smaller than or equal to 0.1% at the same time.

The present invention is defined by the method of claim 1. Provided is a method for recovering a positive electrode plate of a lithium battery, including the following steps of:

S1, reacting a material of a positive electrode plate with a metal salt in an aqueous solution, and performing solid-liquid separation;

S2, dissolving and leaching a solid obtained in the step S1 with a mixed solution of an acid and a reducing agent; and

S3, defluorinating a leaching solution obtained in the step S2, then extracting a transition metal in the leaching solution, and precipitating and separating out lithium in a raffinate,

wherein, in the step S1, a standard electrode potential of the metal in the metal salt is higher than that of aluminum.

In the method for recovering the positive electrode plate of the lithium battery, a reaction principle and a flow process are as follows.

In the step S1, commercially, the positive electrode plate usually includes aluminum foil and a coating material (including a positive electrode active material) coated thereon, and therefore, no matter which method is used to obtain the positive electrode plate, a certain amount of elemental aluminum impurity are inevitably mixed therein. In the step S1 of the present disclosure, since there is a difference between the standard electrode potentials of aluminum and the metal in the metal salt, actually, a replacement reaction occurs between the elemental aluminum impurity in the powder of the positive electrode plate and the metal salt to produce an elemental metal and an aluminum salt, so that aluminum changes from a solid phase to a liquid phase to be dissolved into an aqueous solution, and is finally removed from the solid powder of the positive electrode plate. A reaction formula is shown in formula (1):

$$3M^{n+}+nAl=nAl^{3+}+3M \qquad\qquad (1),$$

where M represents a type of the metal in the metal salt, n+ represents that each metal ion in the metal salt carries n units of positive charges.

In the step S2, an acid leaching method is used to dissolve out metals such as nickel, cobalt, manganese and lithium in the powder of the positive electrode plate obtained in the step S1.

In the step S3, the leaching solution obtained in the step S2 is subjected to impurity removal (mainly, removal of fluorine) treatment, and then a transition metal and lithium in the leachate are separated by using an extraction method. Specifically, the lithium is not extracted and remains in a raffinate; afterwards, an extract liquor is subjected to reverse extraction and crystallization to obtain a mixture of transition metal salts; and the lithium can further be precipitated out of the raffinate.

The present disclosure at least has the following beneficial effects.

(1) Compared with the traditional process, a method for precipitating and removing aluminum from the leaching solution after the material of the positive electrode plate is dissolved and leached, a replacement reaction is firstly utilized to remove ≥98% of the aluminum impurity, so that the situation that removal of aluminum by the traditional precipitation method entrains the transition metal is avoided, and the yield of the transition metal is increased.

(2) Compared with the traditional process in which aluminum is removed via alkali dissolution (alkali and aluminum produce meta-aluminate and hydrogen) and removed via acid dissolution (aluminum and acid produce aluminum ions and hydrogen), the present disclosure uses a metal replacement method, so that production of a large amount of hydrogen is avoided, and the safety of the process flow is improved (hydrogen is flammable and explosive).

(3) Compared with the traditional process in which a method for removing aluminum via alkali dissolution is used, based on the annual processing of 60,000 tons of powder of positive electrode plate, a method for removing aluminum provided by the present disclosure can save the cost by 10 million yuan (RMB)/year.

(4) The special aluminum removal process in the present disclosure and the traditional hydrometallurgical process have a synergistic effect, which can effectively increase the yields of transition metals and lithium and effectively reduce the impurity content therein at the same time.

(5) The method for recovering the positive electrode plate of the lithium battery provided by the present disclosure can recover lithium and byproduct aluminum besides transition metals, so that maximum utilization of waste positive electrode plates is achieved, showing good economic efficiency.

In some embodiments of the present disclosure, in the step S1, a state of the material of the positive electrode plate includes at least one of a powder, a strip and a block.

In some embodiments of the present disclosure, a method for obtaining the powder of the positive electrode plate includes at least one of a shredding method and a soaking method with an organic solvent.

In some embodiments of the present disclosure, the shredding method includes the step of: successively shredding, sorting and screening the positive electrode plates of the waste lithium batteries.

In some embodiments of the present disclosure, an active substance in the positive electrode plate includes at least one of lithium-nickel-cobalt manganate, lithium nickelate, lithium cobaltate, lithium manganate and lithium nickel cobalt aluminate.

In some embodiments of the present disclosure, the active substance in the positive electrode plate may include one or more dopants.

In some embodiments of the present disclosure, the dopant includes at least one of metals (aluminum, magnesium, etc.) and non-metals (fluorine, boron, etc.).

In the step S1, a metal ion in the metal salt includes at least one of nickel ion, cobalt ion and manganese ion; and an anion in the metal salt includes at least one of sulfate, nitrate and chloride ion.

A standard electrode potential of nickel is -0.25 V; the standard electrode potential of manganese is -1.185 V; the standard electrode potential of cobalt is -0.277 V; and the standard electrode potential of aluminum is -1.662 V.

The addition amount of the metal salt is 1.2-2.0 times its theoretical addition amount.

From the formula (1), the theoretical addition amount of the metal salt obeys that a molar ratio of the metal ions to aluminum in the metal salt is 3: n.

The addition amount of the metal salt is 1.2-2.0 times its theoretical addition amount, which represents that the molar ratio of the metal ions to aluminum in the metal salt is (3.6-6): n.

In the step S1, a temperature of the reaction is 60-80 °C.

In the step S1, a time of the reaction is 60-80 min.

In some embodiments of the present disclosure, in the step S1, the reaction specifically includes the following sub steps:

S1\a, mixing the powder of the positive electrode plate and water for slurrying; and
S1b, adding an aqueous solution of the metal salt in a slurry obtained in the step S1a for reaction.

In some embodiments of the present disclosure, in the step S1a, a mass-to-volume ratio of the material of the positive electrode plate to the water is 1 g: (2-5 mL).

In some embodiments of the present disclosure, in the step S1b, the temperature of the reaction is 60-80 °C, and a temperature control method includes heating in a water bath.

In some embodiments of the present disclosure, in the step S1b, the reaction is performed under the state of stirring.

In some embodiments of the present disclosure, in the step S1b, a concentration of the metal in the aqueous solution of the metal salt is 10-15 g/L.

In some embodiments of the present disclosure, the step S1 further includes the steps of performing solid-liquid separation and washing an obtained solid for 2-3 times, after the step S1b.

The aluminum impurity in the material of the positive electrode plate are transferred into the liquid obtained in the step S1 and a waste solution obtained by the washing, and the two liquids are mixed to obtain an aluminum-contained waste solution.

In some embodiments of the present disclosure, pH value of the aluminum-contained waste solution is adjusted to 4-6 so as to obtain solid aluminum residue and a liquid containing the metal salt.

In some embodiments of the present disclosure, a pH adjusting agent for the aluminum-contained waste solution is selected from at least one of a sodium hydroxide solution and a sodium carbonate solution.

In some embodiments of the present disclosure, the aluminum residue may be used for further refining an aluminum material, the metal salt is added in the residual liquid containing the metal salt to adjust the concentration, and then the final liquid is cycled for removal of aluminum.

In some embodiments of the present disclosure, in the step S2, the acid includes at least one of sulfuric acid, hydrochloric acid and nitric acid.

In some embodiments of the present disclosure, in the step S2, the reducing agent includes at least one of hydrogen peroxide, sodium sulfite, sodium thiosulfate and sodium metabisulfite.

In some embodiments of the present disclosure, in the step S2, the mole number of the acid is 1.5-3 times that of the transition metal in the solid obtained in the step S1.

In some embodiments of the present disclosure, in the step S2, the mole number of the acid is 2 times that of the transition metal in the solid obtained in the step S1.

In some embodiments of the present disclosure, in the step S2, the mole number of the reducing agent is 0.5-2 times that of the transition metal in the solid obtained in the step S1.

In some embodiments of the present disclosure, in the step S2, the mole number of the reducing agent is 1 time that of the transition metal in the solid obtained in the step S1.

In some embodiments of the present disclosure, in the step S2, a temperature of the dissolving and leaching is 60-90 °C.

In some embodiments of the present disclosure, in the step S2, the temperature of the dissolving and leaching is 80-85 °C.

In some embodiments of the present disclosure, in the step S2, a time of the dissolving and leaching is (2-5 h).

In some embodiments of the present disclosure, in the step S2, the time of the dissolving and leaching is (3-4 h).

In some embodiments of the present disclosure, the step S2 further includes the step of performing solid-liquid separation after the dissolving and leaching to obtain the leaching solution.

In each waste lithium battery, the positive electrode plate inevitably brings the fluorine impurity as having been infiltrated by an electrolytic solution; and meanwhile, removal of impurities can also introduce fluorine ions, so that it is extremely important to defluorinate the leaching solution.

In the step S3, a temperature of the defluorinating reaction is 25-80 °C.

In the step S3, time of the defluorinating reaction is 40-60 min.

In the step S3, pH value of the defluorinating reaction is 4.0-6.0.

In some embodiments of the present disclosure, a pH adjusting agent of the defluorinating reaction is sulfuric acid.

The defluorinating agent comprises basic sodium aluminum sulfate.

The addition amount of the defluorinating agent is 1-1.5 times a theoretical addition amount.

For example, when the defluorinating agent is the defluorinating agent based on sodium and aluminum containing the basic sodium aluminum sulfate, the defluorinating principle is shown in a formula (2):

$$Na_2Al_6(SO_4)_4(OH)_{12}+36F^-+12H^++16Na^+\rightarrow 6Na_3AlF_6+12H_2O+4SO_4^{2-} \qquad (2);$$

From the formula (2), the theoretical addition amount of the defluorinating agent is 1/36 of the mole number of the fluoride ions; and when the addition amount of the defluorinating agent is 1-1.5 times its theoretical addition amount, a ratio of the mole number of the defluorinating agent to the mole number of fluoride ions is (1-1.5): 36.

In some embodiments of the present disclosure, a method for preparing the basic sodium aluminum sulfate includes the steps of: mixing an aqueous solution of an aluminum salt with an aqueous solution of sodium sulfate to obtain a mixture, and then crystallizing the mixture.

In some embodiments of the present disclosure, the aluminum salt includes at least one of aluminum sulfate, aluminum chloride and aluminum nitrate.

In some embodiments of the present disclosure, the concentration of aluminum in the aqueous solution of the aluminum salt is 12-20 g/L.

In some embodiments of the present disclosure, the mass concentration of the aqueous solution of the aluminum salt is 20%-30%.

In some embodiments of the present disclosure, the mole number of the sodium sulfate is 1/5-1/3 times that of the aluminum ions in the aluminum salt.

A synthesis reaction equation of the basic sodium aluminum sulfate is shown in a formula (3):

$$3Al_2(SO_4)_3+Na_2SO_4+12H_2O\rightarrow Na_2Al_6(SO_4)_4(OH)_{12}\downarrow+6H_2SO_4 \qquad (3).$$

In some embodiments of the present disclosure, prior to the crystallizing, a pH value of the obtained mixture is 6.0-8.0.

In some embodiments of the present disclosure, prior to the crystallizing, an adjusting agent for adjusting the pH value of the obtained mixture is at least one of a sodium carbonate aqueous solution, a sodium hydroxide aqueous solution and a sodium bicarbonate aqueous solution.

In some embodiments of the present disclosure, the mass concentration of the sodium carbonate aqueous solution is 15%-25%.

In some embodiments of the present disclosure, an addition speed of the sodium carbonate aqueous solution is 2.0-5.0 mL/min.

Prior to the crystallizing, the effect of the sulfuric acid as a byproduct in the formula (3) is eliminated by controlling the pH value of the obtained mixture.

Prior to the crystallizing, the reaction for controlling the pH value of the obtained mixture is shown in a formula (4):

$$H_2SO_4+Na_2CO_3\rightarrow Na_2SO_4+H_2O+CO_2\uparrow \qquad (4)$$

In some embodiments of the present disclosure, a temperature of the crystallizing is 120-180 °C;

In some embodiments of the present disclosure, a time of the crystallizing is 12-24 h.

In some embodiments of the present disclosure, the method for preparing the basic sodium aluminum sulfate further includes the step of: after the crystallizing, filtering, washing and drying the obtained solid.

In some embodiments of the present disclosure, the step S3 further includes the step of: performing solid-liquid separation again between the defluorinating and the extracting, so as to separate solid fluorine residue and a defluorinated solution.

Since the basic sodium aluminum sulfate is a solid insoluble into water, which has a large fluorine removal capacity, and does not react with nickel, cobalt, manganese, lithium and the like in the solution, but only reacts with the fluoride ions in the solution, the purpose of selectively defluorinating is achieved. Thus, the loss of metals including nickel, cobalt, manganese and lithium in the solution is avoided. The removal rate of fluorine is up to 99%, the fluorine may be removed with the concentration of 20 mg/L or less, and the concentration of the aluminum ions introduced in the defluorinated solution is less than 0.5 mg/L.

In some embodiments of the present disclosure, the step S3 further includes the step of: removing calcium and magnesium from the leaching solution prior to the defluorinating.

Because the introduction of magnesium in the leaching solution is mainly to dope magnesium element when a main positive electrode active material is prepared, and calcium is mainly mixed in raw materials and auxiliary materials, the leaching solution inevitably has calcium and magnesium impurities.

In some embodiments of the present disclosure, a calcium and magnesium removal agent for removing calcium and magnesium is sodium fluoride.

In some embodiments of the present disclosure, the addition amount of the calcium and magnesium removal agent is 1-2 times its theoretical addition amount.

In some embodiments of the present disclosure, the operation of removing calcium and magnesium is as follows: sodium fluoride is added in the leaching solution for reaction, and then solid-liquid separation is performed to obtain calcium and magnesium residues and a leaching solution after removal of calcium and magnesium.

In some embodiments of the present disclosure, in the step S3, an extraction agent used for the extracting is P507.

In some embodiments of the present disclosure, the step S3 further includes the step of: performing reverse extraction on an extract phase.

In some embodiments of the present disclosure, a reverse extraction solution used for the reverse extraction is an aqueous solution of sulfuric acid.

In some embodiments of the present disclosure, in the step S3, a method for precipitating and separating is as follows: soda is added in the raffinate to form lithium carbonate precipitate.

The lithium carbonate has low solubility in the water, and therefore may be precipitated and separated out.

Unless stated otherwise, the "theoretical addition amount" in the present disclosure represents an addition amount of each substance when the reaction is exactly completed according to a chemical equation.

The method for recovering the positive electrode plate of the lithium battery provided by the present disclosure has the advantages of simple operation, relatively low production cost, stability, reliability and high aluminum removal rate, and is capable of greatly reducing a risk brought by release of the hydrogen during acid leaching. Moreover, since defluorination treatment is performed, the contents of the fluorine in various waste water obtained in the step S3 are all very low, which avoids corrosion of the fluoride ions on equipment in the subsequent process (sewage treatment) and the effects of the fluoride ions on removing oil, COD and the like in the waste water, reducing the cost again.

**BRIEF DESCRIPTION OF DRAWINGS**

The present disclosure will be further illustrated in combination with drawings and examples below, in which:

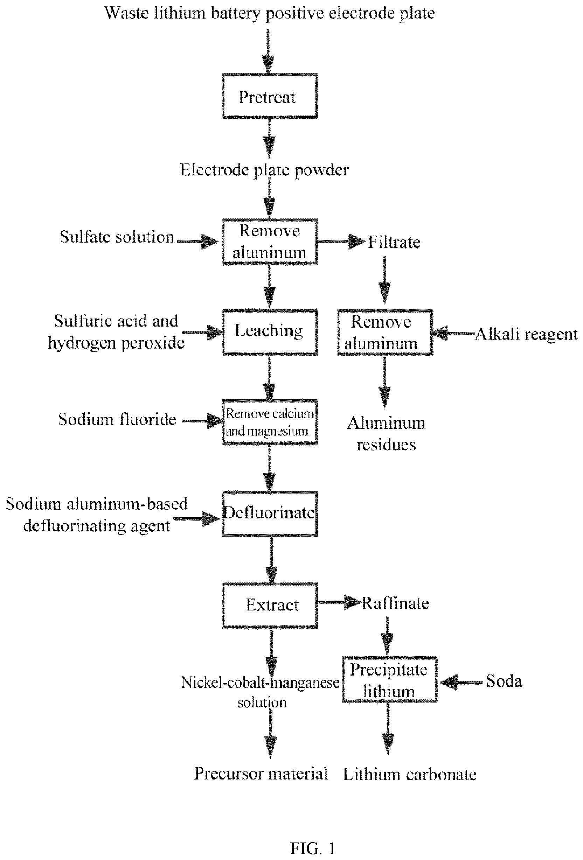

FIG. 1 is a schematic view of a process flow of example 1 according to the present disclosure.

**DETAILED DESCRIPTION OF EMBODIMENTS**

The conception of the present disclosure and the resulting technical effects will be clearly and completely described in combination with examples below to sufficiently understand the objective, the features and the effects of the present disclosure. Obviously, the described examples are only a part of examples of the present disclosure but not all the examples.

**Example 1**

In this example, recovery of a positive electrode plate of a waste ternary lithium ion battery was conducted, specifically including the following steps.

D1, The positive electrode plate of the waste ternary lithium ion battery was shredded, sorted and screened to obtain powder of the positive electrode plate.

D2, Pure water was added in 100 g of the powder of the positive electrode plate (contents in terms of mass percentage: 35.6% of Ni, 10.3% of Co, 12.7% of Mn, 7.1% of Li and 4.6% of Al) obtained in the step D1 in a solid-to-solution ratio (g: mL) of 1: 3 for slurrying, a slurry was heated to 80 °C in a water bath pot, during stirring, a manganese sulfate solution with a manganese concentration of 10 g/L and the amount being 1.3 times (about 1.82 L) a theoretical addition amount was added for reaction for 80 min, then solid-liquid separation was performed to obtain a filtrate and insoluble residue, and the insoluble residue was washed twice with pure water and then dried to obtain 92.3 g of a de-aluminized material, wherein the Al content of the de-aluminized material was 0.06%, and the removal rate of aluminum was 98.8%.

The washing liquors obtained by washing the insoluble residue were merged into the filtrate, then a sodium carbonate solution was added to adjust a pH value to 6.0, then solid-liquid separation was performed to obtain aluminum residue and a filtrate, 18.5 g of the aluminum residue was weighed after being washed and dried, the components in the aluminum residue were detected, and based on mass percent, the aluminum residue contained 0.001% of Ni, 0.001% of Co, 0.002% of Mn and 24.6% of Al.

After being supplemented with manganese sulfate, the filtrate might be continued to be used for removing aluminum from the powder of the positive electrode plate.

In this step, the theoretical addition amount of the manganese sulfate solution was calculated as follows.

The mass of the aluminum contained in 100 g of the powder of the positive electrode plate was calculated: 4.6%×100 g=4.6 g, and the corresponding mole number is 4.6/27 mol.

Form the formula (1), theoretically, the mole number of manganese ions required is 1.5×4.6/27 mol; the mass of the corresponding manganese is 1.5×(4.6/27)×55. Further, the volume of a required manganese sulfate solution with a manganese concentration of 10 g/L is 1.5×(4.6/27)×55/10 L≈1.4 L.

Then, the volume that was 1.3 times the theoretical addition amount was about 1.4×1.3=1.82 L.

In this step, a calculation method for the aluminum removal rate was as follows: 1-the weight of the aluminum in the de-aluminized material/the weight of the aluminum in the powder of the positive electrode plate=1-92.3×0.006%/(100×4.6%).

In this step, a calculation method for the loss rate of nickel, cobalt and manganese was as follows: the amount of nickel, cobalt and manganese in the aluminum residue/the amount of nickel, cobalt and manganese in the powder of the positive electrode plate=18.5×0.004%/(100×58.6%).

D3, An aluminum sulfate solution with an aluminum concentration of 15 g/L was prepared, a sodium sulfate solution with a mass concentration of 20% (a calculation method refers to that in the step D2 in combination with the formula (3)) and the amount being 1.5 times a theoretical addition amount was added, and then a sodium carbonate solution with a mass concentration of 15% was added by using a peristaltic pump at a flow rate of 2.0 mL/min to adjust a pH value of the solution to 6.0, a resulting mixed solution was transferred to a crystallization kettle for crystallization for 24 h at 120 °C, and a crystallized product was filtered, washed, and dried to obtain a defluorinating agent based on sodium and aluminum (basic aluminum sodium sulfate).

D4, Pure water was added in the de-aluminized material obtained in the step D2 in a solid-to-solution ratio of 1 g: 3 mL for slurrying, a slurry was stirred, and a mixed system of sulfuric acid and hydrogen peroxide was added for leaching, wherein the mole number of the sulfuric acid was 2 times a sum of mole numbers of nickel, cobalt and manganese in the de-aluminized material; the mole number of the hydrogen peroxide was 1 time a sum of mole numbers of nickel, cobalt and manganese in the de-aluminized material; a leaching temperature was 85 °C, and a leaching time was 3 h, and then solid-liquid separation was performed to obtain filter residue and a leaching solution.

D5, Sodium fluoride with an addition amount being 1.5 times a theoretical amount for reaction with calcium and magnesium was added in the leaching solution obtained in the step D4 to remove calcium and magnesium, and solid-liquid separation was performed to obtain a solution after removal of calcium and magnesium.

D6, The defluorinating agent based on sodium and aluminum with an addition amount being 1.2 times a theoretical addition amount (which was obtained in the step D3, with a calculation method referring to that in the step D2 in combination with the formula (2)) was added in 500 mL of the solution after removal of calcium and magnesium obtained in the step D4 (in which a fluorine concentration was 1.6 g/L) for reaction for 60 min at 60 °C, dilute sulfuric acid was added during the reaction to maintain a pH value of the solution to 5.5, and after reaction, solid-liquid separation was performed to obtain 571 mL of defluorinated solution and defluorinated residue.

By detection, the defluorinated solution contained 14 mg/L of fluorine and 0.2 mg/L of aluminum, and the fluorine removal rate was 99%; and after being washed and dried, 1.83 g of the defluorinated residue was weighed and contained 0.02% of Ni, 0.01% of Co, 0.01% of Mn and 43.3% of F by detection.

Wherein, a calculation formula of the fluorine removal rate was as follows: 1-content of fluorine in the defluorinated solution/content of fluorine in the solution after removal of calcium and magnesium.

D7, The defluorinated solution obtained in the step D6 was treated with a P507 extraction agent to obtain a raffinate and an organic phase, soda was added in the raffinate to prepare lithium carbonate, and the organic phase was reverse-extracted with sulfuric acid to obtain a nickel-cobalt-manganese sulfate solution for synthesis of a precursor.

In this example, a method for testing the mass percentage of the fluorine element is a test by means of a fluorine ion selective electrode; and a method for testing the mass percentages of other elements is a test by means of an ICP-AES equipment.

In this example, the step D3 only needs to be performed before the step D6 and may be exchanged or implemented at the same time with any steps before the step D6.

The schematic view of process flow of this example is shown in Fig. 1.


**Example 2**

In this example, recovery of a positive electrode plate of a waste ternary lithium ion battery was conducted, specifically including the following steps.

D1, The positive electrode plate of the waste ternary lithium ion battery was shredded, sorted and screened to obtain powder of the positive electrode plate.

D2, Pure water was added in 150 g of the powder of the positive electrode plate (contents in terms of mass percentage: 46.5% of Ni, 5.3% of Co, 6.7% of Mn, 7.3% of Li and 4.3% of Al) obtained in the step D1 in a solid-to-solution ratio (g: mL) of 1: 4 for slurrying, a slurry was heated to 70 °C in a water bath pot, during stirring, a manganese nitrate solution with a manganese concentration of 15 g/L and an addition amount being 2.0 times a theoretical addition amount was added for reaction for 60 min, then solid-liquid separation was performed to obtain a filtrate and insoluble residue, and the insoluble residue was washed twice with pure water and then dried to obtain 136.7 g of de-aluminized material, wherein the Al content of the de-aluminized material was 0.02%, and the removal rate of aluminum was 99.6% by detection.

The washing liquors obtained by washing the insoluble residue were merged into the filtrate, then a sodium carbonate solution was added to adjust a pH value to 6.0, then solid-liquid separation was performed to obtain aluminum residue and a filtrate, 27.1 g of the aluminum residue was weighed after being washed and dried, the aluminum residue contained 0.001% of Ni, 0.001% of Co, 0.004% of Mn and 23.7% of Al by detection, and after being supplemented with manganese nitrate, the filtrate might be continued to be used for removing the aluminum from the powder of the positive electrode plate.

D3, An aluminum sulfate solution with an aluminum concentration of 12 g/L was prepared, a sodium sulfate solution with a mass concentration of 20% and an addition amount being 1.2 times a theoretical addition amount was added, then a sodium carbonate solution with a mass concentration of 20% was added by using a peristaltic pump at a flow rate of 3.0 mL/min to adjust the pH value of the solution to 6.5, a resulting mixed solution was transferred to a crystallization kettle for crystallization for 18 h at 150 °C, and then a crystallized product was filtered, washed, and dried to obtain a defluorinating agent based on sodium and aluminum.

D4, Pure water was added in the de-aluminized material obtained in the step D2 in a solid-to-solution ratio of 1 g: 4 mL for slurrying, a slurry was stirred, and a mixed system of sulfuric acid and hydrogen peroxide was added for leaching, wherein the mole number of sulfuric acid was 2.5 times a sum of mole numbers of nickel, cobalt and manganese in the de-aluminized material, the mole number of hydrogen peroxide was 1.2 times a sum of mole numbers of nickel, cobalt and manganese in the de-aluminized material, a leaching temperature was 80 °C, and a leaching time was 4 h; and then solid-liquid separation was performed to obtain filter residue and a leaching solution.

D5, Sodium fluoride with an addition amount being 1.5 times a theoretical amount for reaction with calcium and magnesium was added in the leaching solution obtained in the step D4 to remove calcium and magnesium, and solid-liquid separation was conducted to obtain a solution after removal of calcium and magnesium.

D6, The defluorinating agent based on sodium and aluminum (from the step D3) with an addition amount being 1.3 times a theoretical amount was added in 600 mL of the solution after removal of calcium and magnesium obtained in the step D5 (in which a fluorine concentration was 1.5 g/L) for reaction for 50 min at 70 °C, dilute sulfuric acid was added during the reaction to maintain the pH value of the solution to 5.5, and after reaction, solid-liquid separation was performed to obtain 643 mL of defluorinated solution and defluorinated residue, wherein by detection, the defluorinated solution contained 14 mg/L of fluorine and 0.5 mg/L of aluminum, and the fluorine removal rate was 99%; and after being washed and dried, 2.2 g of the defluorinated residue was weighed and contained 0.02% of Ni, 0.01% of Co, 0.01% of Mn and 40.5% of F by detection.

D7, The defluorinated solution obtained in the step D6 was treated with a P507 extraction agent to obtain a raffinate and an organic phase, soda was added in the raffinate to prepare lithium carbonate, and the organic phase was reverse-extracted with sulfuric acid to obtain a nickel-cobalt-manganese sulfate solution for synthesis of a precursor.

In this example, calculation methods of addition amounts of various substances, test methods of element contents and setting of a step sequence were the same as those in example 1.

**Example 3**

In this example, recovery of a positive electrode plate of a waste ternary lithium ion battery was conducted, specifically including the following steps.

D1, the positive electrode plate of the waste ternary lithium ion battery was shredded, sorted and screened to obtain powder of the positive electrode plate.

D2, Pure water was added in 200 g of the powder of the positive electrode plate (containing 29.7% of Ni, 10.6% of Co, 16.2% of Mn, 6.9% of Li and 5.1% of Al) obtained in the step D1 in a solid-to-solution ratio (g: mL) of 1: 4 for slurrying, a slurry was heated to 80 °C in a water bath pot, during stirring, a manganese chloride solution with a manganese concentration of 12 g/L and an addition amount being 1.5 times a theoretical addition amount was added for reaction for 80 min, then solid-liquid separation was performed to obtain a filtrate and insoluble residue, and the insoluble residue was washed twice with pure water and then dried to obtain 175.3 g of a de-aluminized material wherein the Al content of the de-aluminized material was 0.05%, and the removal rate of aluminum was 99.1%, and the washing liquors were merged into the filtrate, then a sodium carbonate solution was added to adjust a pH value to 6.0, then solid-liquid separation was performed to obtain aluminum residue and a filtrate, 41.9 g of the aluminum residue was weighed after being washed and dried and contained 0.001% of Ni, 0.001% of Co, 0.003% of Mn and 24.1% of Al by detection, and after being supplemented with manganese chloride, the filtrate might be continued to be used for removing aluminum from the powder of the positive electrode plate.

D3, An aluminum nitrate solution with an aluminum concentration of 20 g/L was prepared, a sodium sulfate solution with a mass concentration of 30% and an addition amount being 2.0 times a theoretical addition amount was added, then a sodium carbonate solution with a mass concentration of 25% was added by using a peristaltic pump at a flow rate of 5.0 mL/min to adjust a pH value of the solution to 6.0, a resulting mixed solution was transferred to a crystallization kettle for crystallization for 12 h at 180 °C, and then a crystallized product was filtered, washed, and dried to obtain a defluorinating agent based on sodium and aluminum (basic sodium aluminum sulfate).

D4, Pure water was added in the de-aluminized material obtained in the step D2 in a solid-to-solution ratio of 1 g: 5 mL, a slurry was stirred, and a mixed system of sulfuric acid and hydrogen peroxide was added for leaching, wherein the mole number of the sulfuric acid was 1.8 times a sum of mole numbers of nickel, cobalt and manganese in the de-aluminized material, the mole number of the hydrogen peroxide was 0.8 times a sum of mole numbers of nickel, cobalt and manganese in the de-aluminized material, a leaching temperature was 80 °C, and a leaching time was 4 h; and then solid-liquid separation was performed to obtain filter residue and a leaching solution.

D5, Sodium fluoride with an addition amount being 1.5 times a theoretical amount for reaction with calcium and magnesium was added in the leaching solution obtained in the step D4 to remove calcium and magnesium, and solid-liquid separation was performed to obtain a solution after removal of calcium and magnesium.

D6, The defluorinating agent based on sodium and aluminum obtained in the step D3 with an addition amount being 1.4 times a theoretical amount was added in 600 mL of the solution after removal of calcium and magnesium obtained in the step D5 (in which a fluorine concentration was 1.6 g/L) for reaction for 40 min at 80 °C, dilute sulfuric acid was added during the reaction to maintain the pH value of the solution to 5.5, and after reaction, solid-liquid separation was performed to obtain 643 mL of defluorinated solution and defluorinated residue, wherein by detection, the defluorinated solution contained 15 mg/L of fluorine and 0.6 mg/L of aluminum, and the fluorine removal rate was 99%; and after being washed and dried, 2.5 g of the defluorinated residue was weighed and contained 0.03% of Ni, 0.01% of Co, 0.01% of Mn and 38.3% of F by detection.

D7, The defluorinated solution obtained in the step D6 was treated with a P507 extraction agent to obtain a raffinate and an organic phase, soda was added in the raffinate to prepare lithium carbonate, and the organic phase was reverse-extracted with the sulfuric acid to obtain a nickel-cobalt-manganese sulfate solution for synthesis of a precursor.

In this example, calculation methods of addition amounts of various substances, test methods of element contents and setting of a step sequence were the same as those in example 1.

Example 4

In this example, recovery of a positive electrode plate of a waste ternary lithium ion battery was conducted, specifically including the following steps.

D1, The positive electrode plate of the waste ternary lithium ion battery was shredded, sorted and screened to obtain powder of the positive electrode plate.

D2, Pure water was added in 100 g of the powder of the positive electrode plate (containing 35.6% of Ni, 10.3% of Co, 12.7% of Mn, 7.1% of Li and 4.6% of Al) for slurrying in a solid-to-solution ratio (g: mL) of 1: 3, a slurry was heated to 80 °C in a water bath pot, during stirring, a nickel sulfate solution with a nickel concentration of 10 g/L and an addition amount being 1.3 times a theoretical addition amount was added for reaction for 80 min, and then solid-liquid separation was performed to obtain a filtrate and insoluble residue.

The insoluble residue was washed twice with pure water and then dried to obtain 91.8 g of a de-aluminized material, wherein by detection, the Al content of the de-aluminized material was 0.4%, and the removal rate of aluminum was 99.2%.

The washing liquors obtained by washing the insoluble residue were merged into the filtrate, then a sodium carbonate solution was added to adjust a pH value to 5.5, then solid-liquid separation was performed to obtain aluminum residue and a filtrate, 19.4 g of the aluminum residue was weighed after being washed and dried and contained 0.002% of Ni, 0.001% of Co, 0.001% of Mn and 23.5% of Al by detection, and after being supplemented with nickel sulfate, the filtrate might be continued to be used for removing aluminum from the powder of the positive electrode plate.

D3, An aluminum sulfate solution with an aluminum concentration of 15 g/L was prepared, a sodium sulfate solution with a mass concentration of 20% and an addition amount being 1.5 times a theoretical addition amount was added in the aluminum sulfate solution, then a sodium carbonate solution with a mass concentration of 20% was added by using a peristaltic pump at a flow rate of 2.5 mL/min to adjust the pH value of the solution to 6.0, a resulting mixed solution was transferred to a crystallization kettle for crystallization for 15 h at 150 °C, and then a crystallized product was filtered, washed and dried to obtain a defluorinating agent based on sodium and aluminum.

D4, Pure water was added in the de-aluminized material obtained in the step D2 in a solid-to-solution ratio of 1 g: 4 mL, a slurry was stirred, and a mixed system of sulfuric acid and hydrogen peroxide was added for leaching, wherein the mole number of the sulfuric acid was 2.0 times a sum of mole numbers of nickel, cobalt and manganese in the de-aluminized material, the mole number of the hydrogen peroxide was 1.0 time a sum of mole numbers of nickel, cobalt and manganese in the de-aluminized material, a leaching temperature was 80 °C, and a leaching time was 4 h; and then solid-liquid separation was performed to obtain filter residue and a leaching solution.

D5, Sodium fluoride with an addition amount was 1.5 times a theoretical amount for reaction with calcium and magnesium was added in the leaching solution obtained in the step D4 to remove calcium and magnesium, and solid-liquid separation was performed to obtain a solution after removal of calcium and magnesium.

D6, The defluorinating agent based on sodium and aluminum (which was obtained in the step D3) with an addition amount being 1.3 times a theoretical amount was added in 500 mL of the solution after removal of calcium and magnesium obtained in the step D5 (in which a fluorine concentration was 1.6 g/L) for reaction for 60 min at 60 °C, dilute sulfuric acid was added during the reaction to maintain the pH value of the solution to 5.5, and after reaction, solid-liquid separation was performed to obtain 640 mL of defluorinated solution and defluorinated residue, wherein by detection, the defluorinated solution contained 15 mg/L of fluorine and 0.4 mg/L of aluminum, and the fluorine removal rate was 99%; and after being washed and dried, 2.3 g of the defluorinated residue was weighed and contained 0.02% of Ni, 0.01% of Co, 0.01% of Mn and 41.2% of F by detection.

D7, The defluorinated solution obtained in the step D6 was treated with a P507 extraction agent to obtain a raffinate and an organic phase, soda was added into the raffinate to prepare lithium carbonate, and the organic phase was reverse-extracted with the sulfuric acid to obtain a nickel-cobalt-manganese sulfate solution for synthesis of a precursor.

In this example, calculation methods of addition amounts of various substances, test methods of element contents and setting of a step sequence were the same as those in example 1.

Comparative example 1

In this comparative example, recovery of a positive electrode plate of a waste ternary lithium ion battery was conducted by using a traditional hydrometallurgical process, specifically including the following steps.

T1, Sulfuric acid and hydrogen peroxide were added in 100 g of the powder of the positive electrode plate (containing 35.6% of Ni, 10.3% of Co, 12.7% of Mn, 7.1% of Li and 4.6% of Al) obtained in the step D1 of example 1 for leaching, wherein an addition amount of the sulfuric acid was 2.0 times the mole numbers of nickel, cobalt and manganese in the powder of the positive electrode plate, an addition amount of the hydrogen peroxide was 1.0 time the mole numbers of nickel, cobalt and manganese in the powder of the positive electrode plate, after solid-liquid separation, sodium carbonate is added into the obtained leaching solution to adjust a pH value to 5.5, and then solid-liquid separation was performed to obtain aluminum residue and a de-aluminized solution.

After being washed and dried, 24.3 g of the aluminum residue was weighed, wherein by detection, the aluminum residue contained 5.7% of Ni, 4.2% of Co, 1.6% of Mn and 18.8% of Al, and the aluminum removal rate was 99.3%.

T2, Calcium and magnesium in the de-aluminized solution obtained in the step T1 were removed with sodium fluoride, and solid-liquid separation was performed to obtain a solution after removal of calcium and magnesium.

T3, Calcium hydroxide (producing calcium fluoride precipitates) with an addition amount being 2.0 times a theoretical amount for reaction with fluoride was added in 500 mL of the solution after removal of calcium and magnesium obtained in the step T2 (in which a fluorine concentration was 1.7 g/L) for reaction for 60 min at 60 °C, dilute sulfuric acid was added during the reaction to maintain a pH value of the solution to 5.5, after reaction, solid-liquid separation was performed to obtain 653 mL of defluorinated solution and defluorinated residue, wherein by detection, the defluorinated solution contained 62 mg/L of fluorine and 189 mg/L of calcium, and the fluorine removal rate was 95%; and after being washed and dried, 3.5 g of the defluorinated residue was weighed and contained 3.3% of Ni, 2.6% of Co, 1.6% of Mn and 23.1% of F by detection.

T4, The defluorinated solution obtained in the step T3 was extracted with a P507 extraction agent to obtain a raffinate and an organic phase, soda was added into the raffinate to prepare lithium carbonate, and the organic phase was reverse-extracted with sulfuric acid to obtain a nickel-cobalt-manganese sulfate solution for synthesis of a precursor.

In this example, calculation methods of addition amounts of various substances, test methods of element contents and setting of a step sequence were the same as those in example 1.

**Comparative example 2**

In this comparative example, recovery of a positive electrode plate of a waste ternary lithium ion battery was conducted by using a traditional hydrometallurgical process, and its specific process was different from that in example 1 in that:

(1) basic aluminum sulfate was used as a defluorinating agent to replace calcium hydroxide in comparative example 1;

and due to a change in the defluorinating agent, a part of parameters in the step T3 had also been changed, specifically as follows:

T3, basic aluminum sulfate was added in 500 mL of the solution after removal of calcium and magnesium obtained in the step T2 (in which a fluorine concentration was 1.7 g/L) according to an amount of 10 g/L for reaction for 60 min at 60 °C, dilute sulfuric acid was added during the reaction to maintain a pH value of the solution to 5.5, after reaction, solid-liquid separation was performed to obtain 610 mL of defluorinated solution and defluorinated residue, wherein by detection, the defluorinated solution contained 237 mg/L of fluorine and 2.5 mg/L of aluminum, and the fluorine removal rate was 83%; and after being washed and dried, 2.1 g of the defluorinated residue was weighed and contained 2.7% of Ni, 1.8% of Co, 0.3% of Mn and 33.5% of F by detection.

**Experiment**

In this experiment, performances of aluminum removing steps of examples 1-4 and comparative example 1 were tested and calculated firstly:

① the aluminum removal rate was calculated according to the calculation method in the step D2 of example 1;

② a sum of the percentages of nickel, cobalt and manganese in aluminum residue was calculated; and

③ the loss rate of nickel, cobalt and manganese in the step of removing aluminum were calculated.

Since metals were added in recovery of a positive electrode plate of a waste ternary lithium ion battery, if the recovery rate of nickel, cobalt and manganese is calculated with the content of nickel, cobalt and manganese in the de-aluminized material, it is relatively complicated, and an error is relatively large. Moreover, a filtrate and the like produced in the process of recovery were all subjected to recycling, so that the only way to cause loss of nickel, cobalt and manganese in the aluminum removal process is a part entrained in the aluminum residue.

In the present disclosure, the mass of nickel, cobalt and manganese in the aluminum residue is divided by the mass of nickel, cobalt and manganese in the powder of the positive electrode plate obtained in the step D1 to obtain the loss rate of nickel, cobalt and manganese.

Calculation results of ①-③ are summarized in Table 1.

Table 1 Performance comparison (mass percentage) of aluminum removing steps in examples 1-4 and comparative example 1

|  | Aluminum removal rate/% | Content of nickel, cobalt and manganese in the aluminum residue/% | Loss rate of nickel, cobalt and manganese/% |
|---|---|---|---|
| Example 1 | 98.8 | 0.004 | <0.1 |
| Example 2 | 99.6 | 0.006 | <0.1 |
| Example 3 | 99.1 | 0.005 | <0.1 |
| Example 4 | 99.2 | 0.004 | <0.1 |
| Comparative | 99.3 | 11.5 | 4.8 |

From Table 1, although the aluminum removing steps in examples 1-4 and comparative example 1 all can achieve high aluminum removal rates, in examples 1-4, while aluminum is removed, the content of nickel, cobalt and manganese in the aluminum residue may be as low as 0.004%, the total loss rate of nickel, cobalt and manganese is < 0.1, which is significantly less than the loss rate of nickel, cobalt and manganese of 4.8% in comparative example 1.

The reason for significant increase in the loss rate of nickel, cobalt and manganese in comparative example 1 is that when the pH value of a high-concentration nickel-cobalt-manganese solution is adjusted to remove aluminum, precipitates of nickel carbonate, cobalt carbonate and manganese carbonate can be formed from nickel, cobalt and manganese, and aluminum hydroxide produced by removal of aluminum can also entrain and adsorb nickel, cobalt and manganese, which results in relatively high content of nickel, cobalt and manganese in the aluminum residue and causes the loss of metals of nickel, cobalt and manganese.

In this experiment, the performances of the defluorination steps in examples 1-4 and comparative examples 1-2 were further tested and calculated, specifically as follows:

④ a fluorine removal rate was calculated according to the calculation method in the step D6 of example 1;

⑤ the percentages of nickel, cobalt and manganese in the defluorinated residue were summed; and

⑥ the concentration of impurities introduced after removal of fluorine compared to that prior to removal of the fluorine (mainly calcium and aluminum, especially the impurities introduced after a defluorinating agent was added) was calculated.

Table 2 Performance comparison of defluorination steps in examples 1-4 and comparative examples 1-2 (based on mass concentration)

| | Fluorine removal rate/% | Content of nickel, cobalt and manganese in the defluorinated residue/% | Concentration of impurity introduced in a defluorinated solution/mg/L |
|---|---|---|---|
| Example 1 | 99 | 0.04 | 0.2 (Al) |
| Example 2 | 99 | 0.04 | 0.4 (Al) |
| Example 3 | 99 | 0.05 | 0.5 (Al) |
| Example 4 | 99 | 0.04 | 0.4 (Al) |
| Comparative | 95 | 7.5 | 189 (Ca) |
| Comparative | 83 | 4.8 | 2.3 (Al) |

From Table 2, the removal rates of fluorine in examples 1-4 are larger than or equal to 99% (the data after rounding is actually larger than 99% mostly), the content of nickel, cobalt and manganese in the defluorinated residue is smaller than 0.05%, and the concentration of aluminum impurity introduced after defluorination is smaller than 0.5 ppm; and the defluorinating principle in examples 1-4 is that the solid defluorinating agent based on sodium and aluminum selectively reacts with fluorine in the solution, and the impurities brought by the defluorinating agent are removed through simple solid-liquid separation even if the defluorinating agent is excessive.

For comparative example 1, when the fluorine removal rate reaches 95%, the content of nickel, cobalt and manganese in the defluorinated residue is up to 7.5%, and the concentration of calcium introduced after defluorinating reaches 189 ppm. This is because when calcium hydroxide is added to remove fluorine, calcium hydroxide can react with fluorine to produce calcium fluoride, and nickel, cobalt and manganese in the solution can also react with calcium hydroxide to form nickel hydroxide, cobalt hydroxide and manganese hydroxide, which leads to high content of nickel, cobalt and manganese in the defluorinated residue.

For comparative example 2, the fluorine removal rate is only 83%, and the content of nickel, cobalt and manganese in the defluorinated residue is 5.8%. For comparative example 2, the basic aluminum sulfate, as the defluorinating agent, has two fluorine removal principles. One principle is that the defluorinating agent is dissolved into water to adjust a pH value to produce aluminum hydroxide (a flocculent adsorbent) to adsorb the fluorine; and the other principle is that ions and fluorine form a complex to achieve the purpose of removing fluorine. However, a defluorinated ability of adsorbing and forming the complex is limited, so the basic aluminum sulfate is not suitable for defluorination of a high-concentration fluorine solution, and there is a need for adding an alkali solution to adjust the pH value during defluorination, but nickel and cobalt in the solution are precipitated with the increase of the pH value so as to cause the loss of nickel and cobalt.

In this experiment, finally, the costs of the aluminum removal methods in examples 1-4 and the traditional method for removing aluminum with dissolution by the alkali liquor (sodium hydroxide) were calculated separately, specifically as follows.

The method for removing aluminum with dissolution by the alkali liquor is as follows: the powder of the positive electrode plate obtained by the method in the step D1 of example 1 of the present disclosure contained about 4 wt% of aluminum; and aluminum reaction for removing 1 kg of aluminum with the alkali liquor required 4.94 kg of a theoretical amount of alkali liquor (30%), wherein the market price of 30% solution caustic soda was about 1.2 yuan (RMB)/kg, and the price of alkali consumed per ton of the powder of the positive electrode plate was 237.12 yuan (RMB).

In order to ensure sufficient contact between the alkali liquor and the powder of the positive electrode plate, slurrying was performed with the powder of the positive electrode plate and water in a ratio of 1 g: 3 mL, then the alkali liquor was added again, and after a reaction, water was added for washing, so that each ton of the powder of the positive electrode plate was treated to produce 3.2 m$^3$ of wastewater, wherein the cost of wastewater treatment is about 1.8 yuan (RMB)/m$^3$, and thus 1 ton of the powder of the positive electrode plate was treated to consume 5.76 yuan (RMB) for treating wastewater.

According to the capacity of treating 60,000 tons of the powder of the positive electrode plate per year, if the method for removing the aluminum with the alkali liquor is used, only considering the amount of the alkali liquor and the wastewater treatment amount, a cost of 14.57 million is spent.

If the aluminum removal method involved in examples 1 to 4 of the present disclosure is adopted, replacement reaction of nickel-cobalt-manganese salt and aluminum is adopted. After reaction, nickel, cobalt and manganese become simple substances to be remained in residue, and the subsequent process adopts sulfuric acid for leaching and recovery (the sulfuric acid is recycled, and thus there is no need for calculation of the cost). In terms of the reaction of 1 kg of aluminum, elemental metals (nickel, cobalt or manganese) of a theoretical amount of 2.2 kg are produced, and treatment for 1 kg of elemental metal requires 2.6 kg of a theoretical amount of sulfuric acid (98%). The market price of sulfuric acid is about 0.3 yuan (RMB)/kg, and the wastewater produced by extracting 1 kg of metal is about 0.05 $m^3$. According to the annual capacity of treating about 60,000 tons of the powder of the positive electrode plate, the cost of removal of aluminum through replacement with nickel-cobalt-manganese soluble salts is 4.6 million yuan (RMB). Therefore, compared with removal of aluminum through dissolution with the alkali liquor, if the nickel-cobalt-manganese replacement method is used to remove aluminum, nearly 10 million yuan (RMB) in cost may be saved a year, in terms of the above-described capacity.

In summary, by optimizing the method for recovering the positive electrode plate of the lithium battery in the present disclosure, not only can the impurities in the valuable metals (the nickel, the cobalt, the manganese, lithium) be more effectively removed, but also is the loss rate of transition metals reduced, with significant cost savings.

The examples of the present disclosure have been described in detail in combination with drawings above. However, the present disclosure is not limited to the above-mentioned examples. Furthermore, in the case of no conflict, the examples of the present disclosure and the features in the examples can be combined with each other.

**Claims**

1. A method for recovering a positive electrode plate of lithium batteries, comprising following steps:

   S1, subjecting a material of the positive electrode plate and a metal salt to reaction in an aqueous solution, and performing solid-liquid separation, to obtain a solid;
   wherein, a standard electrode potential of a metal in the metal salt is higher than a standard electrode potential of aluminum; metal ions in the metal salt comprise at least one of nickel ions, cobalt ions, and manganese ions; anions in the metal salt comprise at least one of sulfate ions, nitrate ions, and chloride ions; an addition amount of the metal salt is 1.2-2.0 times a theoretical addition amount thereof; a temperature of the reaction is 60-80 °C, and a time of the reaction is 60-80 min;
   S2, dissolving and leaching the solid obtained in step S1 with a mixed solution of an acid and a reducing agent, to obtain a leaching solution; and
   S3, subjecting the leaching solution obtained in step S2 to a defluorinating reaction to obtain a defluorinated leaching solution, then extracting transition metals in the defluorinated leaching solution to obtain a raffinate and an extract phase, and precipitating and separating out lithium in the raffinate;
   wherein, a defluorinating agent used for the defluorinating reaction comprises basic sodium aluminum sulfate, an addition amount of the defluorinating agent is 1-1.5 times a theoretical addition amount thereof; the defluorinating reaction is conducted at a temperature of 25-80 °C for 40-60 min and at a pH of 4.0-6.0.

2. The method according to claim 1, wherein in the step S2, the acid comprises at least one of sulfuric acid, hydrochloric acid and nitric acid.

3. The recovery method according to claim 1, wherein in the step S2, the reducing agent comprises at least one of hydrogen peroxide, sodium sulfite, sodium thiosulfate and sodium metabisulfite.

4. The method according to claim 1, wherein the basic sodium aluminum sulfate is prepared by a method comprising: mixing an aqueous solution of an aluminum salt with an aqueous solution of sodium sulfate to obtain a mixture, and then crystallizing the mixture, to obtain the basic sodium aluminum sulfate.

5. The method according to claim 4, wherein a mole number of the sodium sulfate is 1/5-1/3 times a mole number of the aluminum ions in the aluminum salt.

6. The method according to claim 4, wherein, prior to the crystallizing, a pH of the mixture is 6.0-8.0.

7. The method according to claim 4, wherein a temperature of the crystallizing is 120-180 °C.

8. The method according to claim 4, wherein a time of the crystallizing is 12-24 h.

9. The method according to claim 1, wherein in the step S3, an extraction agent used for the extracting is P507.

10. The method according to claim 1, wherein the step S3 further comprises a step of performing reverse extraction on the extract phase.

**Patentansprüche**

1. Verfahren zur Rückgewinnung einer positiven Elektrodenplatte von Lithiumbatterien, umfassend die folgenden Schritte:

   S1, Unterwerfen eines Materials der positiven Elektrodenplatte und eines Metallsalzes einer Reaktion in einer wässrigen Lösung und Durchführen einer Feststoff-Flüssigkeits-Trennung, um einen Feststoff zu erhalten; wobei ein Standardelektrodenpotential eines Metalls in dem Metallsalz höher ist als ein Standardelektrodenpotential von Aluminium; Metallionen in dem Metallsalz mindestens eines von Nickelionen, Kobaltionen und Manganionen umfassen; Anionen in dem Metallsalz mindestens eines von Sulfationen, Nitrationen und Chloridionen umfassen; eine Zugabemenge des Metallsalzes das 1,2-2,0-fache einer theoretischen Zugabemenge davon beträgt; eine Temperatur der Reaktion 60-80 °C beträgt und eine Zeit der Reaktion 60-80 min beträgt;
   S2, Auflösen und Auslaugen des in Schritt S1 erhaltenen Feststoffs mit einer gemischten Lösung aus einer Säure und einem Reduktionsmittel, um eine Auslaugungslösung zu erhalten; und
   S3, Unterziehen der in Schritt S2 erhaltenen Auslaugungslösung einer Defluorierungsreaktion, um eine defluorierte Auslaugungslösung zu erhalten, dann Extrahieren von Übergangsmetallen in der defluorierten Auslaugungslösung, um ein Raffinat und eine Extraktphase zu erhalten, und Ausfällen und Abtrennen von Lithium in dem Raffinat;
   wobei ein Defluorierungsmittel, das für die Defluorierungsreaktion verwendet wird, basisches Natriumaluminiumsulfat umfasst, eine Zugabemenge des Defluorierungsmittels das 1-1,5-fache einer theoretischen Zugabemenge davon beträgt; die Defluorierungsreaktion bei einer Temperatur von 25-80 °C für 40-60 min und bei einem pH-Wert von 4,0-6,0 durchgeführt wird.

2. Verfahren nach Anspruch 1, wobei in Schritt S2 die Säure mindestens eines von Schwefelsäure, Salzsäure und Salpetersäure umfasst.

3. Rückgewinnungsverfahren nach Anspruch 1, wobei in Schritt S2 das Reduktionsmittel mindestens eines von Wasserstoffperoxid, Natriumsulfit, Natriumthiosulfat und Natriummetabisulfit umfasst.

4. Verfahren nach Anspruch 1, wobei das basische Natriumaluminiumsulfat durch ein Verfahren hergestellt wird, das Folgendes umfasst: Mischen einer wässrigen Lösung eines Aluminiumsalzes mit einer wässrigen Lösung von Natriumsulfat, um ein Gemisch zu erhalten, und anschließendes Kristallisieren des Gemisches, um das basische Natriumaluminiumsulfat zu erhalten.

5. Verfahren nach Anspruch 4, wobei die Molzahl des Natriumsulfats das 1/5-1/3-fache der Molzahl der Aluminiumionen in dem Aluminiumsalz beträgt.

6. Verfahren nach Anspruch 4, wobei vor dem Kristallisieren der pH-Wert des Gemisches 6,0-8,0 beträgt.

7. Verfahren nach Anspruch 4, wobei die Temperatur der Kristallisation 120-180 °C beträgt.

8. Verfahren nach Anspruch 4, wobei die Zeit der Kristallisation 12-24 h beträgt.

9. Verfahren nach Anspruch 1, wobei in Schritt S3 ein für die Extraktion verwendetes Extraktionsmittel P507 ist.

10. Verfahren nach Anspruch 1, wobei der Schritt S3 ferner einen Schritt des Durchführens einer umgekehrten Extraktion aus der Extraktphase umfasst.

**Revendications**

1. Procédé de récupération d'une plaque d'électrode positive de batteries au lithium, comprenant les étapes suivantes :

   S1, soumettre un matériau de la plaque d'électrode positive et un sel métallique à une réaction dans une solution aqueuse, et effectuer une séparation solide-liquide, afin d'obtenir un solide ;
   dans lequel un potentiel standard d'électrode d'un métal dans le sel métallique est supérieur à un potentiel standard d'électrode de l'aluminium ; des ions métalliques dans le sel métallique comprennent au moins l'un des ions nickel, des ions cobalt et des ions manganèse ; des anions dans le sel métallique comprennent au moins l'un des ions sulfate, des ions nitrate et des ions chlorure ; une quantité d'addition du sel métallique est de 1,2 à 2,0 fois une quantité d'addition théorique de celui-ci ; une température de la réaction est de 60 à 80 °C, et une durée de la réaction est de 60 à 80 min ;
   S2, dissoudre et lixivier le solide obtenu à l'étape S1 au moyen d'une solution mélangée d'un acide et d'un agent réducteur, afin d'obtenir une solution de lixiviation ; et
   S3, soumettre la solution de lixiviation obtenue à l'étape S2 à une réaction de défluoration afin d'obtenir une solution de lixiviation défluorée, puis extraire des métaux de transition de la solution de lixiviation défluorée afin d'obtenir un raffinat et une phase d'extraction, et précipiter et séparer le lithium dans le raffinat ;
   dans lequel un agent de défluoration utilisé pour la réaction de défluoration comprend du sulfate d'aluminium sodique basique, une quantité d'addition de l'agent de défluoration est de 1 à 1,5 fois une quantité d'addition théorique de celui-ci ; la réaction de défluoration est réalisée à une température de 25 à 80 °C pendant 40 à 60 min et à un pH de 4,0 à 6,0.

2. Procédé selon la revendication 1, dans lequel, à l'étape S2, l'acide comprend au moins l'un de l'acide sulfurique, de l'acide chlorhydrique et de l'acide nitrique.

3. Procédé de récupération selon la revendication 1, dans lequel, à l'étape S2, l'agent réducteur comprend au moins l'un du peroxyde d'hydrogène, du sulfite de sodium, du thiosulfate de sodium et du métabisulfite de sodium.

4. Procédé selon la revendication 1, dans lequel le sulfate d'aluminium sodique basique est préparé par un procédé comprenant : mélanger une solution aqueuse d'un sel d'aluminium avec une solution aqueuse de sulfate de sodium afin d'obtenir un mélange, puis cristalliser le mélange, afin d'obtenir le sulfate d'aluminium sodique basique.

5. Procédé selon la revendication 4, dans lequel un nombre de moles du sulfate de sodium est de 1/5 à 1/3 fois un nombre de moles des ions aluminium dans le sel d'aluminium.

6. Procédé selon la revendication 4, dans lequel, avant la cristallisation, un pH du mélange est de 6,0 à 8,0.

7. Procédé selon la revendication 4, dans lequel une température de la cristallisation est de 120 à 180 °C.

8. Procédé selon la revendication 4, dans lequel une durée de la cristallisation est de 12 à 24 h.

9. Procédé selon la revendication 1, dans lequel, à l'étape S3, un agent d'extraction utilisé pour l'extraction est le P507.

10. Procédé selon la revendication 1, dans lequel l'étape S3 comprend en outre une étape consistant à effectuer une rétro-extraction de la phase d'extraction.

Waste lithium battery positive electrode plate

Pretreat

Electrode plate powder

Sulfate solution → Remove aluminum → Filtrate

Sulfuric acid and hydrogen peroxide → Leaching

Remove aluminum ← Alkali reagent

Sodium fluoride → Remove calcium and magnesium

Aluminum residues

Sodium aluminum-based defluorinating agent → Defluorinate

Extract → Raffinate

Nickel-cobalt-manganese solution

Precipitate lithium ← Soda

Precursor material    Lithium carbonate

FIG. 1